# EUROPEAN PATENT APPLICATION

(11) **EP 4 001 683 A1**
(43) Date of publication of application: **25.05.2022**
(21) Application number: 21204909.2
(22) Date of filing: 27.10.2021
(51) Int. Cl.: F16D 13/74, F16D 25/0638, F16H 57/04, F16H 59/42, F16H 57/021

(54) **AUTOMATIC TRANSMISSION, AND VEHICLE**

(30) Priority: 19.11.2020 JP 2020192613
(71) Applicant: MAZDA MOTOR CORPORATION, Hiroshima 730-8670 (JP)
(72) Inventor: IWASAKI, Tatsuhiko, Aki-gun, Hiroshima (JP); MIZOBE, Tatsutoshi, Aki-gun, Hiroshima (JP); NAKAMURA, Keiichi, Aki-gun, Hiroshima (JP); YAMAGUCHI, Masaya, Aki-gun, Hiroshima (JP)
(74) Representative: Müller-Boré & Partner Patentanwälte PartG mbB

(57) **Abstract**

An automatic transmission includes a starting clutch which connects and disconnects motive power between an engine and a transmission mechanism. The starting clutch includes a clutch hub connected to the engine, a clutch drum connected to the transmission mechanism, a friction plate provided between the clutch hub and the clutch drum, and a piston which presses the friction plate. The clutch drum has a radial-direction portion extending from an end portion of the outer-side cylindrical portion on one axial-direction side to the radial-direction inner side, and an annular oil dam member extending from an end portion of the outer-side cylindrical portion on the other axial-direction side to the radial-direction inner side to immerse the friction plate in oil supplied from the radial-direction inner side toward the outer side, together with the outer-side cylindrical portion and the radial-direction portion.

## Description

### [Technical Field]

The present invention relates to an automatic transmission, and a vehicle.

### [Background Art]

In an automatic transmission mounted on a vehicle such as an automobile, typically, a motive power transmitting path of a transmission mechanism using a plurality of planetary gear mechanisms is switched by selectively fastening or engaging a plurality of friction fastening (or engaging) elements such as a clutch and a brake to form a shift stage according to an operational state of the vehicle.

In a vehicle having the automatic transmission coupled to an engine, torque fluctuation occurs in an output shaft of the engine due to intermittent explosion in each cylinder of the engine. For example, in an in-line four-cylinder four-cycle engine, the torque fluctuation occurs twice while the output shaft of the engine rotates once, and this torque fluctuation is transmitted from the engine to the automatic transmission.

The automatic transmission has, of a plurality of rotation elements forming the motive power transmitting path which transmits motive power from the engine to a drive wheel, a plurality of rotation elements in an unconstrained state (free state) except for a rotation element coupled to an input member connected to the engine and a rotation element coupled to an output member connected to the drive wheel.

When the automatic transmission is in a neutral state in which the plurality of friction fastening elements are brought into a released state and no motive power is transmitted from the engine to the drive wheel, the plurality of rotation elements in the unconstrained state are stopped or rotated in association with rotation of other rotation elements. When torque fluctuation of the engine is transmitted from the input member side of the automatic transmission coupled to the engine without provision of a fluid transfer device, the rotation elements themselves are also subjected to the torque fluctuation.

In recent years, there is a tendency that the number of shift stages of the automatic transmission is increased. When the number of planetary gear mechanisms or friction fastening elements increases in association with the increase in the number of stages of the automatic transmission, the weight of each rotation element may increase, and the inertial mass of the rotation element in the unconstrained state when the automatic transmission is in the neutral state may increase.

If the inertial mass of the rotation element of the planetary gear mechanism in the unconstrained state when the automatic transmission is in the neutral state increases, when the torque fluctuation of the engine is transmitted from an input element of the planetary gear mechanism on the input member side of the automatic transmission, the rotation element serves as a reaction element, and the torque fluctuation is transmitted to an output element of the planetary gear mechanism on the output member side of the automatic transmission, so that the torque fluctuation might be transmitted to the output member side of the automatic transmission. When the torque fluctuation of the engine is transmitted to the output member side of the automatic transmission, the torque fluctuation is transmitted from the output member of the automatic transmission to the drive wheel, so that vibration of a vehicle body might occur.

In contrast, Patent Literature 1 discloses a starting clutch provided between an engine and a transmission mechanism to connect and disconnect motive power between the engine and an automatic transmission. When in neutral, the starting clutch is brought into a released state, thereby suppressing transmission of the torque fluctuation of the engine to the drive wheel side via the transmission mechanism.

In an automatic transmission, normally, gear-shifting control is performed using input rotation of the transmission mechanism or the like. In an automatic transmission including a starting clutch, rotation of either a clutch drum or clutch hub of the starting clutch which is connected to the transmission mechanism may be detected.

The automatic transmission has more enough space in a section on the radial-direction outer side than in a section on the radial-direction inner side, and thus the clutch drum disposed on the radial-direction outer side more easily detects a rotational speed than the clutch hub disposed on the radial-direction inner side; accordingly, it is considered that the transmission mechanism is connected to the clutch drum.

Lubrication of the starting clutch is performed by supplying oil from the radial-direction inner side toward the radial-direction outer side. In the case where the clutch drum is connected to the transmission mechanism, the clutch drum does not rotate during stopping of the vehicle, and thus the oil supplied from the radial-direction inner side to the outer side cannot be held in an outer-side cylindrical portion of the clutch drum, so that the lubrication of the starting clutch might become insufficient.

In contrast, in the starting clutch of Patent Literature 1, the outer peripheral side of the starting clutch is provided with a housing, and lubricating oil supplied from the radial-direction inner side toward the outer side is filled in the housing for improvement of lubrication of the starting clutch.

### [Citation List]

### [Patent Literature]

[Patent Literature 1] Japanese Patent Laid-Open No. 2013-47571

### [Summary]

### [Problem to be Solved]

However, the lubrication structure of the starting clutch disclosed in Patent Literature 1 is provided with the housing covering the outer peripheral side of the starting clutch and thus might become a complicated structure.

The present invention aims to provide an automatic transmission which includes a clutch disposed between an engine and a transmission mechanism, and having a clutch drum connected to the transmission mechanism, and which achieves, with a simple structure, lubrication of a starting clutch at the time of stopping of a vehicle.

### [Means for Solving the Problem]

This problem is solved by the invention as defined in claim 1.

The present invention provides an automatic transmission including a starting clutch which is disposed between an engine and a transmission mechanism and connects and/or disconnects motive power between the engine and the transmission mechanism, wherein
the starting clutch includes a clutch hub connected to the driving source and having an inner-side cylindrical portion located on a radial-direction inner side, a clutch drum connected to the transmission mechanism and having an outer-side cylindrical portion disposed on the radial-direction outer side of the inner-side cylindrical portion, a friction plate provided slidably between the clutch hub and the clutch drum, and a piston which presses the friction plate from one axial-direction side, and
the clutch drum includes a radial-direction portion extending from an end portion of the outer-side cylindrical portion on the one axial-direction side to the radial-direction inner side, and an annular oil dam member extending from an end portion of the outer-side cylindrical portion on another axial-direction side to the radial-direction inner side to immerse the friction plate in oil supplied from the radial-direction inner side toward the outer side, together with the outer-side cylindrical portion and the radial-direction portion.

According to the present invention, a recess having a bottom portion on the radial-direction outer side and open to the radial-direction inner side is formed by the outer-side cylindrical portion, the radial-direction portion, and the oil dam member. With this, the oil supplied from the radial-direction inner side toward the outer side is accumulated in the recess, and the friction plate can be immersed in the oil. As a result, even when the clutch drum does not rotate at the time of stopping of the vehicle, it is possible to achieve lubrication of the starting clutch with a simple structure only including the oil dam member. Specifically, when the friction plate which rotates with rotation of the clutch hub passes through the inside of the recess, the lubrication is performed with the oil accumulated in the recess.

A rotational speed sensor for detecting an input rotational speed of the transmission mechanism may be disposed on the radial-direction outer side of the clutch drum.

According to this configuration, for example, as compared with a case where the clutch hub is connected to the transmission mechanism and a rotation sensor and wiring and the like for the rotation sensor are provided in a limited space on the radial-direction inner side of the clutch hub, the rotational speed sensor can be disposed with a simple structure. Gear-shifting control and the like of the transmission can be executed with the input rotational speed of the transmission mechanism detected by the rotational speed sensor.

A baffle member for guiding the oil supplied from the radial-direction inner side toward the outer side to the radial-direction outer side of the inner-side cylindrical portion may be disposed on the radial-direction inner side of the clutch hub.

According to this configuration, the oil is guided toward the radial-direction outer side of the inner-side cylindrical portion by the baffle member, so that the oil can be more effectively supplied by the friction plate disposed on the radial-direction outer side of the clutch hub.

The oil dam member may extend to the radial-direction inner side from the baffle member.

According to this configuration, a liquid surface of the oil stored in the recess formed by the oil dam member becomes on the radial-direction inner side from the baffle member, so that the baffle member can be immersed in the oil. As a result, it becomes easier to obtain the effect of the baffle member to guide the oil to the radial-direction outer side.

The piston may include a pressing portion disposed on the one axial-direction side of the friction plate and extending in a radial direction, and a cylindrical portion extending from the pressing portion to the other axial-direction side and located on the radial-direction inner side of the clutch hub, and the cylindrical portion may be provided with a through hole penetrating through the cylindrical portion in the radial direction.

According to this configuration, the oil supplied from the radial-direction inner side toward the outer side is supplied to the clutch hub located on the outer peripheral side of the cylindrical portion via the through hole of the cylindrical portion of the piston. Even when the cylindrical portion of the piston is disposed on the radial-direction inner side of the clutch hub, the oil can be supplied to the clutch hub.

### [Advantageous Effect of Invention]

According to the present invention, in the automatic transmission including the clutch disposed between the engine and the transmission mechanism and having the clutch drum connected to the transmission mechanism, it is possible to achieve, with the simple structure, the lubrication of the starting clutch at the time of stopping of the vehicle.

### [Brief Description of Drawings]

FIG. 1 is a cross-sectional view illustrating a starting clutch of an automatic transmission according to an embodiment of the present invention.
FIG. 2 is an enlarged cross-sectional view of the starting clutch indicated by arrow II in FIG. 1.
FIG. 3 is an enlarged cross-sectional view of the starting clutch indicated by arrow III in FIG. 1.
FIG. 4 is an exploded perspective view of a part of the starting clutch.
FIG. 5 is an exploded perspective view of the remaining part of the starting clutch.
FIG. 6 is a partially enlarged perspective view of a baffle member.
FIG. 7 is a development view of the baffle member.
FIG. 8(a) is a cross-sectional view of the baffle member along line VIIIa-VIIIa in FIG. 7, and FIG. 8(b) is a cross-sectional view of the baffle member along line VIIIb-VIIIb in FIG. 7.
FIG. 9 is an explanatory view of a lubricating action of the baffle member.

### [Embodiment for Carrying Out the Invention]

Hereinafter, an embodiment of the present invention will be described. All of the described features may not necessarily be essential.

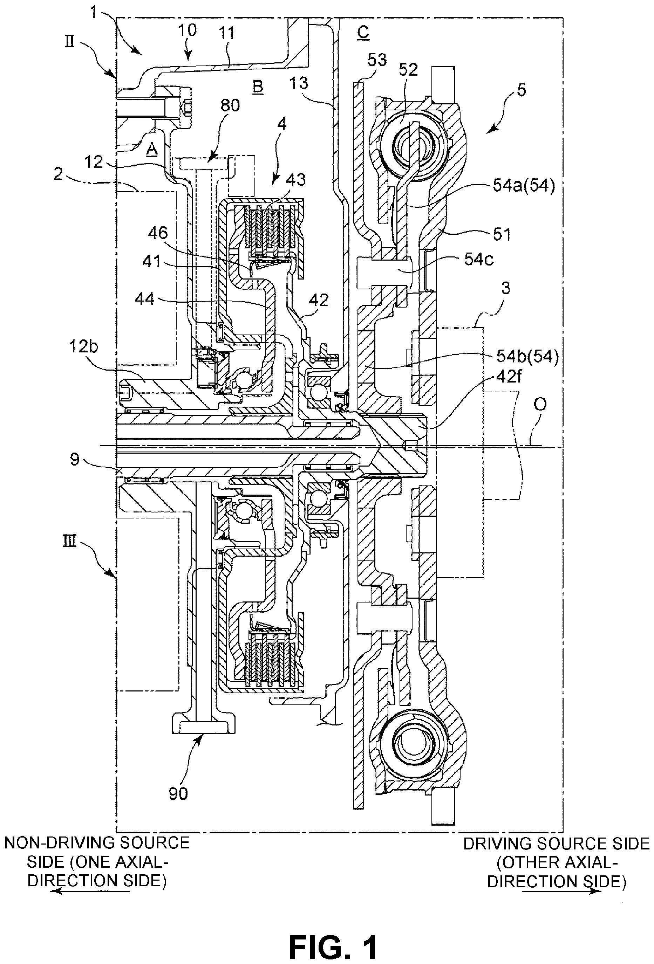

FIG. 1 illustrates a configuration of an automatic transmission 1 on the driving source side in the embodiment of the present invention, and its surroundings. The automatic transmission 1 according to the embodiment of the present invention is coupled to an engine (not illustrated) as a driving source without via a fluid transfer device such as a torque converter. The engine may be an in-line four-cylinder engine in which four cylinders are disposed in line, which is not limited to this. Torque fluctuation may occur twice while a crankshaft which is an output shaft 3 of the engine rotates once.

The automatic transmission 1 includes a transmission mechanism 2 having one or a plurality of planetary gear sets and one or a plurality of friction fastening (or engaging) elements such as a clutch and a brake, and a starting clutch 4 disposed between the transmission mechanism 2 and the engine. It should be noted that in the present embodiment, the non-driving source side may be referred to as one axial-direction side and the driving source side may be referred to as the other axial-direction side.

The transmission mechanism 2 is configured to achieve a predetermined shift stage according to an operational state of a vehicle by selectively fastening or engaging a plurality of friction fastening (engaging) elements and switching a motive power transmitting path passing through each planetary gear set. In the vehicle, particularly an automobile, equipped with the automatic transmission 1, motive power from the transmission mechanism 2 is transmitted to a drive wheel.

In the automatic transmission 1, the transmission mechanism 2 and the starting clutch 4 are housed in a transmission case 10, and the transmission mechanism 2, the starting clutch 4, and the output shaft (crankshaft) 3 of the engine are particularly disposed side by side on the same axis line O. In the present embodiment, a flywheel damper 5 for suppressing transmission of torque fluctuation of the engine to the automatic transmission 1 side may be disposed between the engine and the starting clutch 4.

The transmission case 10 houses therein the transmission mechanism 2 and the starting clutch 4, and includes a cylindrical case body 11 having an opening on the engine side, and a partition wall 12 partitioning the inside of the case body 11 in the axial direction.

The partition wall 12 divides a space in the case body 11 into a space (transmission mechanism chamber) A on the transmission mechanism 2 side and a space (starting clutch chamber) B on the starting clutch 4 side.

The opening of the case body 11 on the engine side is particularly closed by a damper housing 13 which houses therein the flywheel damper 5 and which is coupled to a cylinder block of an engine 3 and the like. The damper housing 13 is configured to close a space (damper chamber) C on the engine side with respect to the space (starting clutch chamber) B on the starting clutch 4 side.

An input shaft 9 of the transmission mechanism 2 is provided such that the input shaft 9 penetrates through the partition wall 12 and a tip of the input shaft 9 protrudes into the clutch chamber B.

An engine-side input shaft 42f which is connected to the flywheel damper 5, which will be described later, is rotatably connected to the outer peripheral side of an end portion of the input shaft 9 of the transmission mechanism 2 on the driving source side. The engine-side input shaft 42f is provided such that the engine-side input shaft 42f penetrates through the damper housing 13 and a tip of the engine-side input shaft 42f protrudes into the damper chamber C.

The flywheel damper 5 particularly has a disc-shaped input plate 51, an elastic member 52 such as a coil spring, a flywheel 53 for reducing torque fluctuation of the engine, and a disc-shaped output plate 54.

The output shaft 3 of the engine is fixed to the input plate 51, and the input plate 51 is configured to rotate on the same axis O in association with rotation of the output shaft 3. The input plate 51 is provided with, in the circumferential direction, one or a plurality of holding portions (not illustrated) which hold the elastic member 52.

The output plate 54 particularly has a first output plate 54a having an outer peripheral portion which is engaged with the elastic member 52, and a second output plate 54b disposed on the non-driving source side of the first output plate 54a and having an end portion on the radial-direction inner side which is spline-fitted to the engine-side input shaft 42f. Regarding the first output plate 54a and the second output plate 54b, an end portion of the first output plate 54a on the radial-direction inner side and an end portion of the second output plate 54b on the radial-direction outer side may be coupled together by a coupling member 54c such as a rivet pin. With this, rotation of the output shaft 3 of the engine is transmitted to the engine-side input shaft 42f of the automatic transmission 1 via the elastic member 52. It should be noted that the disc-shaped flywheel 53 is disposed on the non-driving source side of the second output plate 54b, and an inner end portion of the flywheel 53 is fixed to the first output plate 54a and the second output plate 54b by the coupling member 54c.

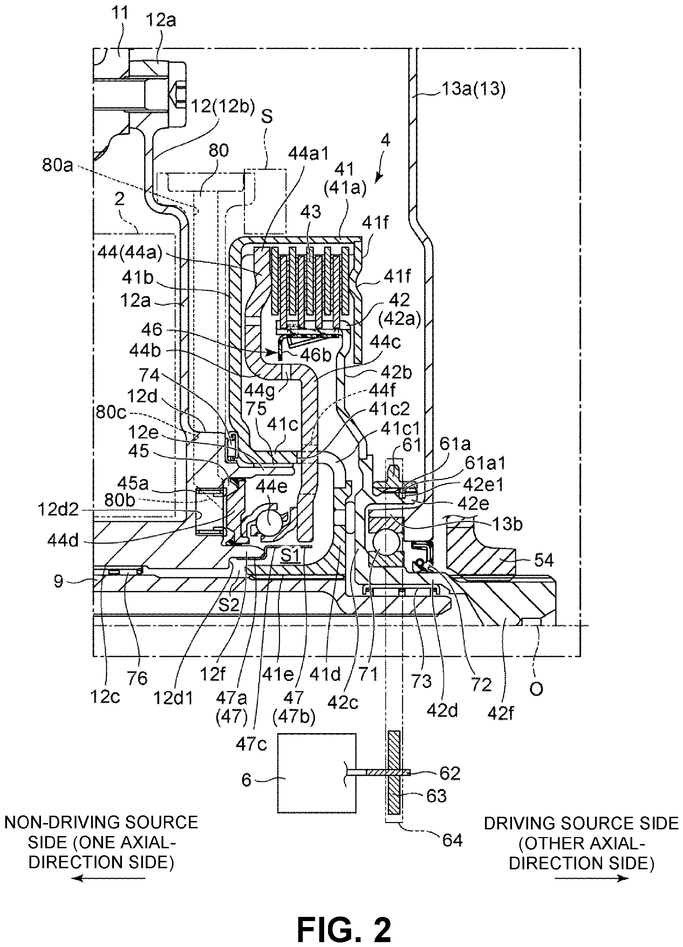

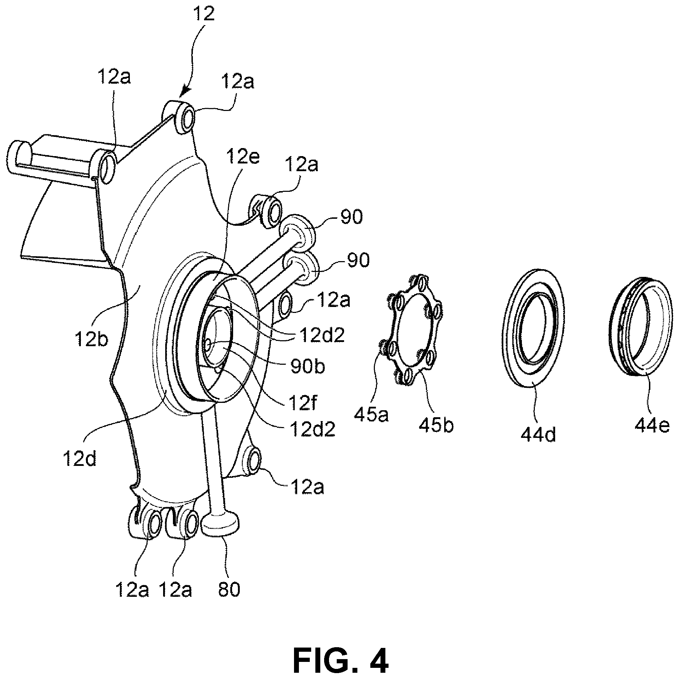

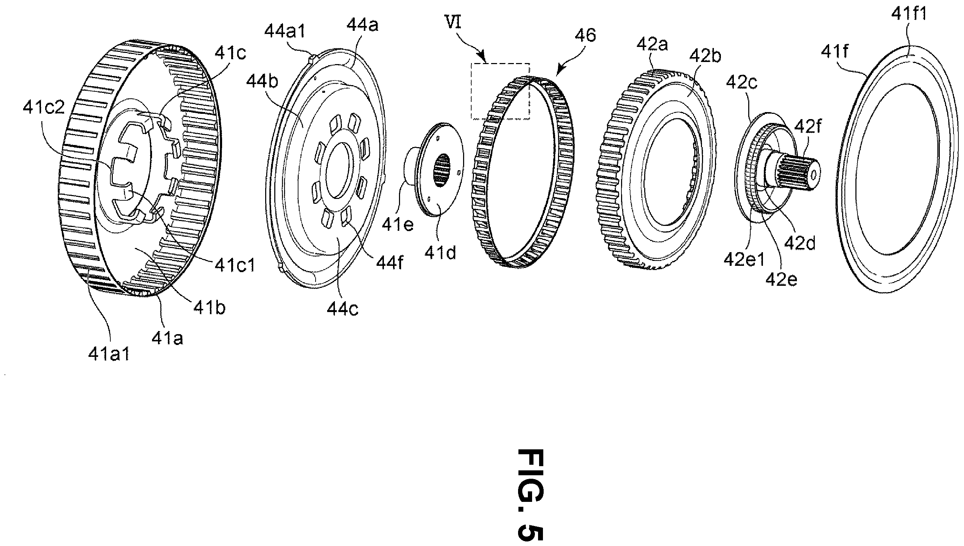

Next, a configuration of the starting clutch 4 will be described with reference to FIGs. 2 to 5. It should be noted that FIGs. 4 and 5 are exploded perspective views of a clutch drum 41, a clutch hub 42, a piston 44, and the partition wall 12 which form the starting clutch 4.

As illustrated in FIG. 2, the starting clutch 4 has the clutch drum 41, the clutch hub 42, a plurality of friction plates 43 disposed side by side in the axial direction between the clutch drum 41 and the clutch hub 42 and alternately spline-engaged with the clutch drum 41 and the clutch hub 42, the piston 44 disposed on the non-driving source side (one axial-direction side) of the friction plates 43, and a hydraulic chamber 45 provided on the non-driving source side of the piston 44. When pressure or fastening (or engaging) pressure is supplied to the hydraulic chamber 45, the piston 44 of the starting clutch 4 presses the friction plates 43 to couple the clutch drum 41 and the clutch hub 42 together, thereby fastening or engaging the starting clutch 4.

The clutch drum 41 is formed by, for example, pressing a plate member made of a magnetic body of iron material or the like. The clutch drum 41 includes an outer-side cylindrical portion 41a with which the friction plates 43 are engaged, a first radial-direction portion 41b extending from an end portion of the outer-side cylindrical portion 41a on the one axial-direction side to the radial-direction inner side, a first axial-direction portion 41c extending from an inner end portion of the first radial-direction portion 41b on the radial-direction inner side to the other axial-direction side, a second radial-direction portion 41d extending from an end portion of the first axial-direction portion 41c on the other axial-direction side to the radial-direction inner side, and a second axial-direction portion 41e extending from an inner end portion of the second radial-direction portion 41d on the radial-direction inner side to the one axial-direction side.

Irregularities 41a1 of a spline portion may be formed on an inner peripheral surface and outer peripheral surface of the outer-side cylindrical portion 41a particularly by pressing (see FIG. 5).

A rotational speed sensor S for detecting a rotational speed of the clutch drum 41 is disposed on the outer peripheral side of the outer-side cylindrical portion 41a. The rotational speed sensor S outputs a detection signal based on a rotation rate (or rotational speed) of the clutch drum 41, and for example, a magnetic sensor can be used as the rotational speed sensor S.

For example, the rotational speed sensor S may be fixed to an unillustrated control valve or the like so as to face an outer peripheral surface of the clutch drum 41, and is configured to detect the irregularities 41a1 formed on the outer peripheral surface of the clutch drum 41 to thereby output the detection signal based on the rotation rate of the clutch drum 41. Gear-shifting control of the automatic transmission 1 is performed based on this detection signal.

The first radial-direction portion 41b particularly extends along the partition wall 12 so as to be generally orthogonal to the axial direction. The first axial-direction portion 41c is formed in a comb-teeth shape and penetrates through, in the axial direction, through holes 44f equally disposed side by side in the circumferential direction and provided in the piston 44, which will be described later (see FIG. 5). A spline portion may be formed on the radial-direction inner side of the second axial-direction portion 41e and spline-fitted to the input shaft 9.

Particularly, in the clutch drum 41, the outer-side cylindrical portion 41a, the first radial-direction portion 41b, and the first axial-direction portion 41c are formed separately from the second radial-direction portion 41d and the second axial-direction portion 41e. In the clutch drum 41, in a state where the first axial-direction portion 41c penetrates through, in the axial direction, the through holes 44f provided in the piston 44, which will be described later, a flange portion 41c1 extending from another end portion in the axial direction provided in the first axial-direction portion 41c to the radial-direction inner side and an end portion of the second radial-direction portion 41d on the radial-direction outer side are joined together by welding and integrated.

The end portion of the first axial-direction portion 41c formed in the comb-teeth shape is closed by the ring-shaped second radial-direction portion 41d, thereby enhancing rigidity of the clutch drum 41 as compared with a case where the end portion of the first axial-direction portion 41c remains in the comb-teeth shape and coupling to the input shaft 9 is made. It should be noted that the manufacturing method of the clutch drum 41 and the piston 44 is not limited to the above-described welding, and the clutch drum 41 and the piston 44 may be, for example, an additively-manufactured article formed by an additive manufacturing method. In this case, the clutch drum 41 and the piston 44 are formed integrally.

The clutch hub 42 includes an inner-side cylindrical portion 42a with which the friction plates 43 are engaged, a disc-shaped first radial-direction portion 42b extending from an end portion of the inner-side cylindrical portion 42a on the other axial-direction side to the radial-direction inner side, a second radial-direction portion 42c extending further from an inner end portion of the first radial-direction portion 42b to the radial-direction inner side, a cylindrical portion 42d extending from an end portion of the second radial-direction portion 42c on the radial-direction inner side to the other axial-direction side, and a shaft portion 42f extending further from an end portion of the cylindrical portion 42d on the other axial-direction side in the axial direction. The output plate 54 of the flywheel damper 5 is spline-fitted to an outer periphery of the shaft portion 42f. The shaft portion 42f is formed as the engine-side input shaft 42f which inputs rotation of the engine to the starting clutch 4.

The clutch hub 42 is provided with a cylinder portion 42e extending from a section on the radial-direction outer side of the second radial-direction portion 42c to the other axial-direction side. An outer peripheral surface of the cylinder portion 42e is provided with a spline portion, and a driving-side sprocket 61 for driving an oil pump 6 is fitted thereto. The spline portion of the cylinder portion 42e and a spline portion of the driving-side sprocket 61 are provided with respective engagement portions 42e1 and 61a for engaging a snap ring 61a1 for restricting movement of the driving-side sprocket 61 in the axial direction.

The oil pump 6 is formed by, for example, a vane pump, and a driving shaft 62 of a rotor including a vane is provided with a driven-side sprocket 63. When the clutch hub 42 rotates in association with rotation of the engine, the driving-side sprocket 61 rotates. The rotation of the driving-side sprocket 61 is transmitted to the driven-side sprocket 63 via a chain 64 wound around the driving-side sprocket 61 and the driven-side sprocket 63 to drive the oil pump 6.

The clutch hub 42 is rotatably supported on the damper housing 13 via a bearing 71 disposed between an outer peripheral surface of the cylindrical portion 42d and a boss portion 13b provided at an end portion of a raised wall portion 13a of the damper housing 13 on the radial-direction inner side.

The boss portion 13b may be located on the radial-direction inner side of the cylinder portion 42e, and an axial-direction position of the boss portion 13b overlaps with that of the cylinder portion 42e.

A seal member 72 may be disposed between a section on the driving-source side (the other axial-direction side) of the boss portion 13b and the outer peripheral surface of the cylindrical portion 42d so as to separate the damper chamber C and the starting clutch chamber B in an oil tight state.

An inner peripheral surface of the cylindrical portion 42d and the input shaft 9 are made relatively rotatable by a needle bearing 73 disposed between the two.

An annular baffle member 46 particularly formed of resin or the like is press-fitted to an inner peripheral surface of the inner-side cylindrical portion 42a. The baffle member 46 will be described later in detail.

The piston 44 has a disc-shaped pressing portion 44a disposed on the one axial-direction side of the friction plates 43 to press the friction plates 43 at the time of fastening or engaging, a cylindrical portion 44b extending from an inner end portion of the pressing portion 44a to the one axial-direction side, a radial-direction portion 44c extending from an end portion of the cylindrical portion 44b on the other axial-direction side to the radial-direction inner side, a disc-shaped pressure receiving portion 44d including a pressure receiving surface which receives hydraulic pressure supplied to the hydraulic chamber 45, and a bearing portion 44e disposed between the radial-direction portion 44c and the pressure receiving portion 44d.

The pressing portion 44a extends to the radial-direction inner side from the inner-side cylindrical portion 42a of the clutch hub 42. Projections 44a1 protruding in the radial direction are disposed side by side in the circumferential direction on the radial-direction outer side of the pressing portion 44a (see FIG. 5). The projection 44a1 is engaged with the spline portion of the outer-side cylindrical portion 41a of the clutch drum 41, thereby achieving rotation prevention of the piston 44.

The cylindrical portion 44b is located on the radial-direction outer side of the first axial-direction portion 41c of the clutch drum 41 and on the radial-direction inner side of the inner-side cylindrical portion 42a of the clutch hub 42 and is disposed so as to overlap with the inner-side cylindrical portion 42a and the first axial-direction portion 41c in the axial direction. The cylindrical portion 44b is provided with a through hole 44g penetrating through the cylindrical portion 44b in the radial direction. The through hole 44g is provided at an axial-direction position corresponding to a flange portion 46b of the baffle member 46, which will be described later.

The radial-direction portion 44c intersects with the first axial-direction portion 41c of the clutch drum 41 in a comb-teeth shape and extends to a position on the radial-direction outer side of the second axial-direction portion 41e. The radial-direction portion 44c is provided with the through hole 44f penetrating therethrough in the axial direction.

As illustrated in FIG. 5, one or a plurality of the through holes 44f are provided. Particularly, the plurality of the through holes 44f are provided side by side in the circumferential direction corresponding to the comb-teeth shaped first axial-direction portion 41c. Each of the through holes 44f is formed such that the first axial-direction portion 41c can penetrate therethrough.

The bearing portion 44e may be disposed on the one axial-direction side of the radial-direction portion 44c. An inner race of the bearing portion 44e is connected to an inner end portion of the radial-direction portion 44c by welding or the like, and an outer race of the bearing portion 44e is connected to a surface of the pressure receiving portion 44d on the other axial-direction side by welding or the like. The pressure receiving portion 44d and the bearing portion 44e are disposed within first and second cylinder portions 12e and 12f of the partition wall 12, which will be described later. The pressure receiving portion 44d and the bearing portion 44e are located on the radial-direction inner side from the first axial-direction portion 41c and disposed so as to overlap with the first axial-direction portion 41c in the axial direction. Furthermore, the bearing portion 44e also overlaps with the cylindrical portion 44b of the piston 44 in the axial direction.

The hydraulic chamber 45 is particularly formed by the partition wall 12 and the pressure receiving portion 44d of the piston 44, and configurations of the partition wall 12 and the hydraulic chamber 45 will be described.

The partition wall 12 particularly includes a fixed portion 12a which is fixed to an end portion of the case body 11 on the radial-direction outer side, a raised wall portion 12b extending from the fixed portion 12a to the radial-direction inner side, and a boss portion 12c extending to the non-driving source side (one axial-direction side) at a radial-direction inner end portion of the raised wall portion 12b. The input shaft 9 is made relatively rotatable with respect to the partition wall 12 by a needle bearing 76 disposed between an inner peripheral surface of the boss portion 12c and the input shaft 9.

A section on the radial-direction inner side of the raised wall portion 12b may be provided with a protrusion 12d protruding to the driving source side (the other axial-direction side). The protrusion 12d is located on the non-driving source side from the first radial-direction portion 41b of the clutch drum 41, and a bearing 74 is disposed between a surface of the protrusion 12d on the non-driving source side and the first radial-direction portion 41b so that the protrusion 12d and the first radial-direction portion 41b are relatively rotatable.

A tubular first cylinder portion 12e extending in the axial direction and a cylindrical second cylinder portion 12f located on the radial-direction inner side from the first cylinder portion 12e may be provided on the radial-direction inner side from the bearing 74 on a surface of the protrusion 12d on the driving source side. The first axial-direction portion 41c of the clutch drum 41 is fitted to an outer peripheral surface of the first cylinder portion 12e via a bush 75.

The first cylinder portion 12e extends to an axial-direction position of a cutout portion 41c2 cut out in the comb-teeth shape of the first axial-direction portion 41c.

The second cylinder portion 12f is located on the radial-direction outer side from the second axial-direction portion 41e of the clutch drum 41 and overlaps with the second axial-direction portion 41e in the axial direction.

A ring-shaped guide member 47 is particularly press-fitted to an inner peripheral surface of the second cylinder portion 12f. The guide member 47 extends from the inner peripheral surface of the second cylinder portion 12f to a position on the radial-direction inner side of the radial-direction portion 44c of the piston. The guide member 47 has a fitting portion 47a which is fitted to the inner peripheral surface of the second cylinder portion 12f, and an extended portion 47b extending further from an end portion of the fitting portion 47a on the driving source side in the axial direction and having a larger diameter than the fitting portion 47a. The extended portion 47b is provided with a through hole 47c penetrating therethrough in the radial direction at an axial-direction position corresponding to the bearing portion 44e.

A first passage S1 extending in the axial direction and open to a region on the driving source side of the radial-direction portion 44c of the piston 44 may be provided between an inner peripheral surface of the guide member 47 (the fitting portion 47a and the extended portion 47b) and an outer peripheral surface of the second axial-direction portion 41e.

A second passage S2 allowing communication between a space between an outer peripheral surface of the input shaft 9 and an inner peripheral surface of the partition wall 12 and the first passage S1 may be provided between a corner portion 12d1 formed by the inner peripheral surface of the second cylinder portion 12f and the surface of the protrusion 12d on the driving source side and an end portion of the second axial-direction portion 41e on the non-driving source side.

A plurality of recesses 12d2 open to the driving source side may be equally provided in the circumferential direction on the surface of the protrusion 12d on the driving source side and between the first cylinder portion 12e and the second cylinder portion 12f.

A spring 45a, which will be described later, is particularly disposed in the recess 12d2 (see FIG. 4). The pressure receiving portion 44d is fitted between an inner peripheral surface of the first cylinder portion 12e and an outer peripheral surface of the second cylinder portion 12f.

The hydraulic chamber 45 is particularly formed by the inner peripheral surface of the first cylinder portion 12e, the outer peripheral surface of the second cylinder portion 12f, a surface of the raised wall portion 12b on the driving source side (the other axial-direction side), and a surface of the pressure receiving portion 44d on the non-driving source side, in an oil tight state.

It should be noted that the raised wall portion 12b particularly communicates with an upper end portion of the hydraulic chamber 45 and is particularly provided with an air releasing portion (not illustrated) for releasing air accumulated in the hydraulic chamber 45.

As described above, the automatic transmission 1 is connected to the engine without via a torque converter, and thus the starting clutch 4 is configured to be subjected to slip control at the time of starting of the vehicle at the first speed (or the first gear) and the reverse speed (or the reverse gear).

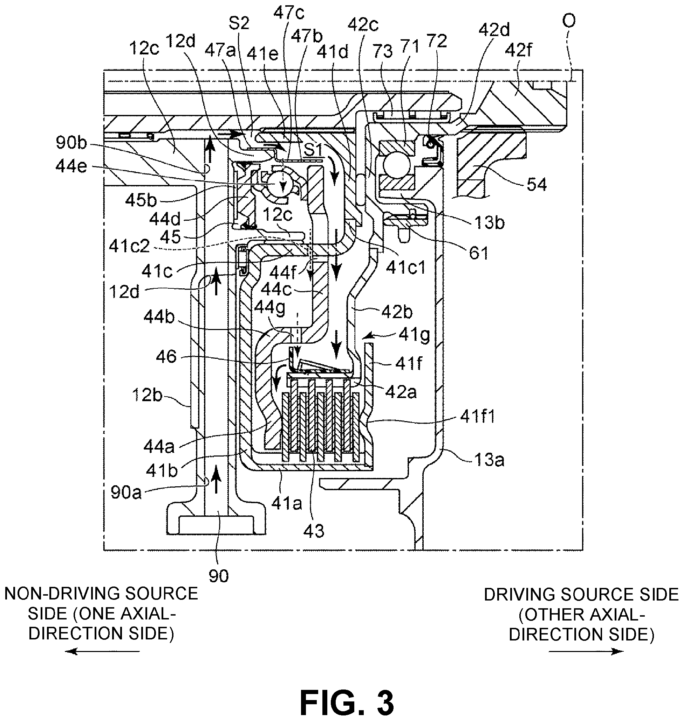

Particularly, the spring 45a which biases, in the fastening or engaging direction, the piston 44 from a released position to a zero clearance position at which the friction plates 43 are in a zero clearance state, and a ring-shaped seat member 45b on which the spring 45a is seated are disposed within the hydraulic chamber 45 of the starting clutch 4 (see FIG. 3).

Thus, the starting clutch 4 which is subjected to the slip control at the time of starting of the vehicle biases, with the spring 45a, the piston 44 from the released position to the zero clearance position at which the friction plates 43 are in the zero clearance state, and biases the piston 44 from the zero clearance position to a fastened position with fastening hydraulic pressure to fasten the friction plates 43.

As illustrated in FIG. 2, a fastening (or engaging) operating oil supply passage 80 which supplies fastening (or engaging) operating oil is connected to the hydraulic chamber 45. The fastening operating oil supply passage 80 has a fastening radial-direction oil passage 80a provided on the raised wall portion 12b and led from an unillustrated control valve unit to extend in the radial direction, an inclined oil passage 80b provided within the protrusion 12d and communicating with the hydraulic chamber 45, and a fastening communicating passage 80c provided within the protrusion 12d and allowing communication between the fastening radial-direction oil passage 80a and the inclined oil passage 80b.

The fastening radial-direction oil passage 80a is orthogonal to the axial direction, extends in the radial direction along the raised wall portion 12b of the partition wall 12, and is connected to an outer peripheral surface of the protrusion 12d. The fastening communicating passage 80c is provided at a circumferential-direction position corresponding to the fastening radial-direction oil passage 80a and extends from the outer peripheral surface of the protrusion 12d toward the radial-direction inner side. The inclined oil passage 80b may be provided so as to be inclined to the radial-direction outer side from the hydraulic chamber 45 toward the non-driving source side and communicates with the fastening communicating passage 80c. In this way, the fastening operating oil supply passage 80 leading from the fastening radial-direction oil passage 80a to the hydraulic chamber 45 of the starting clutch 4 via the fastening communicating passage 80c and the inclined oil passage 80b is formed.

As illustrated in FIG. 3, the partition wall 12 is particularly provided with a lubricating oil supply passage 90 which supplies lubricating oil for lubricating the starting clutch 4. The lubricating oil supply passage 90 particularly has a lubricating radial-direction oil passage 90a provided on the raised wall portion 12b and led from the unillustrated control valve unit to extend in the radial direction, and a lubricating communicating passage 90b provided within the protrusion 12d and extending in the radial direction.

The lubricating radial-direction oil passage 90a may be orthogonal to the axial direction, extends in the radial direction along the raised wall portion 12b of the partition wall 12, and is connected to the outer peripheral surface of the protrusion 12d. The lubricating radial-direction oil passage 90a is provided at a different position from the fastening radial-direction oil passage 80a in the circumferential direction (see FIG. 4). The lubricating communicating passage 90b is provided at a position corresponding to the lubricating radial-direction oil passage 90a in the circumferential direction, extends from the outer peripheral surface of the protrusion 12d toward the radial-direction inner side, and is open to the inner peripheral surface of the partition wall 12. In this way, the lubricating oil supply passage 90 is formed by the lubricating radial-direction oil passage 90a and the lubricating communicating passage 90b.

As indicated by arrows of FIG. 3, lubricating oil supplied to the inner peripheral surface side of the partition wall 12 via the lubricating oil supply passage 90 is particularly supplied from the radial-direction inner side of the automatic transmission 1 toward the outer side. Further particularly, lubricating oil supplied from a valve body to between the inner peripheral surface of the partition wall 12 and the outer peripheral surface of the input shaft 9 via the lubricating radial-direction oil passage 90a and the lubricating communicating passage 90b is supplied from the second passage S2 and the first passage S1 to a space between the radial-direction portion 44c of the piston 44 and the second radial-direction portion 41d of the clutch drum 41.

The lubricating oil supplied to the space between the radial-direction portion 44c and the second radial-direction portion 41d passes through the cutout portion 41c2 of the clutch drum 41, is supplied to the inner peripheral surface side of the inner-side cylindrical portion 42a of the clutch hub 42 located on the radial-direction outer side of the cutout portion 41c2, and is supplied from an end portion of the inner-side cylindrical portion 42a on the non-driving source side to between the friction plates 43. As a result, the lubricating oil supplied to between the friction plates 43 lubricates the friction plates 43 and is supplied to the outer-side cylindrical portion 41a side of the clutch drum 41.

In this way, the lubricating oil supplied from the valve body is configured to be supplied from the input shaft 9 side toward the outer-side cylindrical portion 41a side of the clutch drum 41.

Furthermore, the lubricating oil supplied to the inner peripheral surface side of the partition wall 12 via the lubricating oil supply passage 90 passes through the through hole 47c of the guide member 47 from the second passage S2 and the first passage S1 as indicated by a dashed arrow of FIG. 3 to lubricate the bearing portion 44e. The lubricating oil having been used to lubricate the bearing portion 44e passes through the cutout portion 41c2 of the clutch drum 41 from the radial-direction inner side toward the outer side and is supplied to the clutch hub 42 via the through hole 44g of the cylindrical portion 44b of the piston along a surface of the radial-direction portion 44c of the piston on the non-driving source side.

The starting clutch 4 includes an oil dam member 41f for facilitating lubrication of the starting clutch 4, and the baffle member 46. The oil dam member 41f and the baffle member 46 will be described with reference to FIGs. 3 and 6 to 8.

As illustrated in FIG. 3, the ring-shaped oil dam member 41f extending from an end portion of the outer-side cylindrical portion 41a on the other axial-direction side (driving source side) to the radial-direction inner side is disposed at the outer-side cylindrical portion 41a of the clutch drum 41. The oil dam member 41f is located on the other axial-direction side of the friction plates 43, and is fixed to the outer-side cylindrical portion 41a particularly by an end portion of the oil dam member 41f on the radial-direction outer side being welded to the outer-side cylindrical portion 41a. The oil dam member 41f has a function of causing the friction plates 43 to be immersed in oil supplied from the radial-direction inner side toward the outer side, for the lubrication of the starting clutch 4, and has a role as a restricting member which restricts movement of the friction plates 43 in the axial direction at the time of fastening.

The oil dam member 41f extends to the radial-direction inner side from the baffle member 46 fitted to the inner peripheral side of the clutch hub 42, which will be described later, from the outer-side cylindrical portion 41a toward the inner side.

A recess 41g having a bottom portion on the radial-direction outer side and open to the radial-direction inner side is formed by the outer-side cylindrical portion 41a, the oil dam member 41f, and the first radial-direction portion 41b. With this, the oil supplied from the radial-direction inner side toward the outer side is stored in the recess 41g. The friction plates 43 are disposed between the outer-side cylindrical portion 41a and the inner-side cylindrical portion 42a, and thus the friction plates 43 are disposed within the recess 41g. The friction plates 43 disposed in the recess 41g are brought into a state of being immersed in the oil stored in the recess 41g.

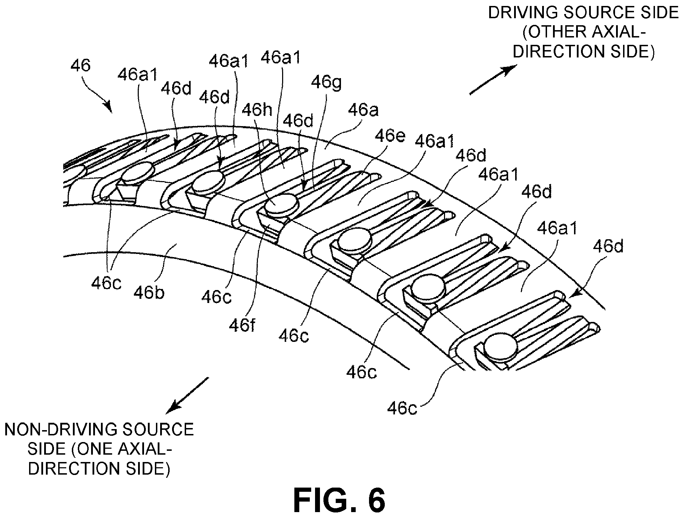

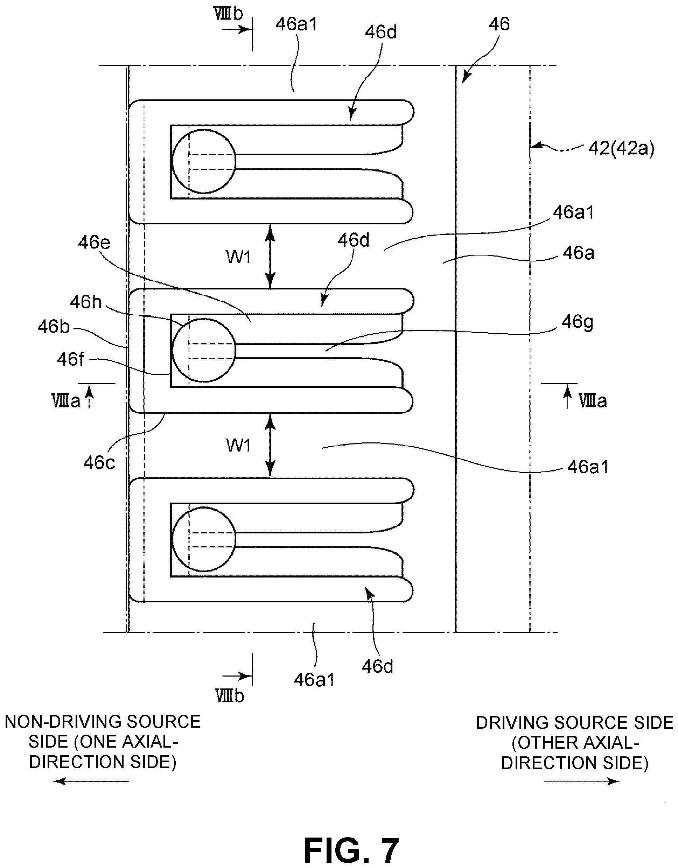

As illustrated in FIG. 3, the baffle member 46 is fitted to an inner peripheral surface of the clutch hub 42. As illustrated in FIGs. 6 and 7, the baffle member 46 particularly includes a cylindrical body 46a, the flange portion 46b extending from an end portion of the body 46a on the one axial-direction side to the radial-direction inner side, and one or a plurality of openings 46c disposed side by side in the circumferential direction and penetrating through the body 46a in the radial direction. The plurality of openings 46c disposed side by side in the circumferential direction are formed, thereby forming a land portion 46a1 formed by the remaining part not open to the body 46a. The land portion 46a1 and the opening 46c are provided alternately side by side in the circumferential direction. The opening 46c may be provided with a guide portion 46d for guiding the oil stored in the recess 41g of the clutch drum 41 to the radial-direction outer side.

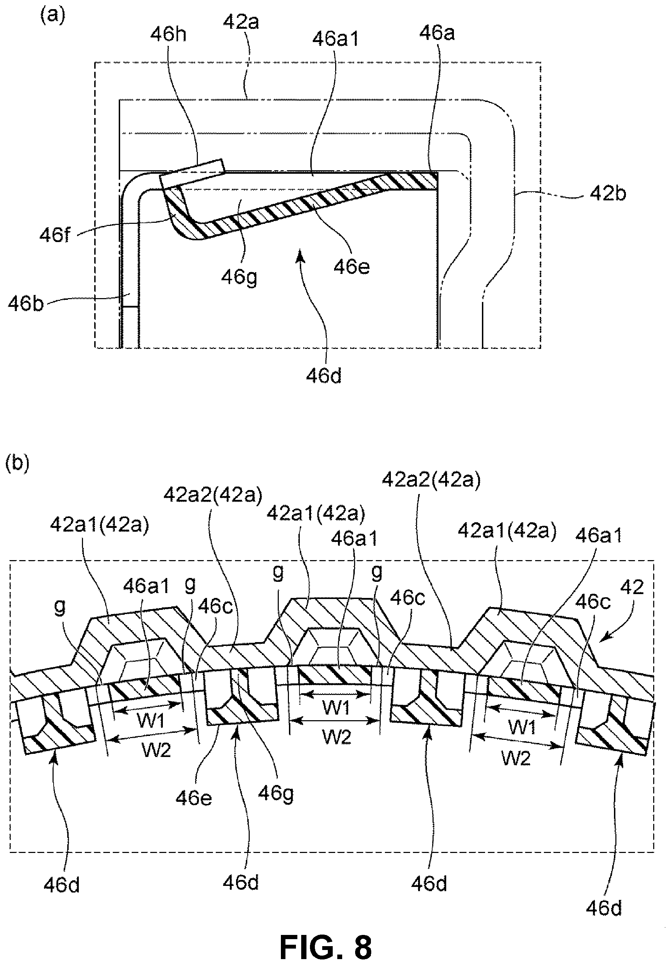

As illustrated in FIG. 8(a), the guide portion 46d includes a tongue piece portion 46e extending so as to be inclined to the radial-direction inner side from an end portion of the opening 46c on the driving source side (the other axial-direction side) toward the non-driving source side (one axial-direction side), a flange portion 46f orthogonal to the tongue piece portion 46e from an end portion of the tongue piece portion 46e on the one axial-direction side and rising toward the radial-direction outer side, a wall portion 46g rising from a center portion of the tongue piece portion 46e in the circumferential direction toward the extending direction of the flange portion 46f, and a stopper portion 46h disposed on the radial-direction outer side of the flange portion 46f.

The tongue piece portion 46e is formed by a slope inclined to the radial-direction inner side from the one axial-direction side toward the other axial-direction side so as to be located on the radial-direction inner side from the land portion 46a1 (body 46a). The tongue piece portion 46e is inclined at a predetermined inclination angle with respect to the axial direction.
An end portion of the flange portion 46f on the radial-direction outer side is located in the vicinity of the body 46a.

The stopper portion 46h is formed in a disc shape as viewed in the radial direction and is connected to the end portion of the flange portion 46f on the radial-direction outer side in a state of being inclined to the radial-direction inner side from the driving source side toward the non-driving source side along the inclination of the tongue piece portion 46e. The stopper portion 46h is formed such that an end portion thereof on the non-driving source side substantially coincides with an outer peripheral surface of the body 46a, and thus an end portion of the stopper portion 46h on the driving source side protrudes to the radial-direction outer side from the outer peripheral surface of the body 46a.

When the baffle member 46 is fitted to the inner-side cylindrical portion 42a of the clutch hub 42, the end portion of the stopper portion 46h on the driving source side is pressed to the radial-direction inner side by the inner peripheral surface of the inner-side cylindrical portion 42a, so that the stopper portion 46h elastically deforms. Restoring force of the elastically deformed stopper portion 46h suppresses separation of the baffle member 46 from the inner-side cylindrical portion 42a.

The wall portion 46g extends from the tongue piece portion 46e to an outer peripheral surface of the body 46a and has a substantially triangular shape in which a radial-direction region spreads from the driving source side toward the non-driving source side. The area of the wall portion 46g is enlarged as the inclination angle of the tongue piece portion 46e is increased.

As illustrated in FIG. 8(b), circumferential-direction positions of the land portion 46a1 and the tongue piece portion 46e are set such that the land portion 46a1 corresponds to a tooth top 42a1 of a spline tooth of the clutch hub 42 and the tongue piece portion 46e corresponds to a tooth bottom 42a2 of the spline tooth of the clutch hub 42.

A width W1 of the land portion 46a1 in the circumferential direction is set to be smaller than a width W2 between inner peripheral surfaces of the adjacent tooth bottoms 42a2 of the clutch hub 42. The land portion 46a1 is disposed so as to be located at a center between the adjacent tooth bottoms 42a2 of the clutch hub 42. A gap g is provided between the inner peripheral surface of the tooth bottom 42a2 of the clutch hub 42 disposed on one circumferential-direction side of the land portion 46a1 and the land portion 46a1, and between the inner peripheral surface of the tooth bottom 42a2 of the clutch hub 42 disposed on the other circumferential-direction side of the land portion 46a1 and the land portion 46a1. The gap g allows communication between an inner peripheral surface of the baffle member 46 and an inner peripheral surface of the tooth top 42a1 of the clutch hub 42.

The tongue piece portion 46e and the wall portion 46g protrude to the inner peripheral surface side of the baffle member 46, and the tongue piece portion 46e and the wall portion 46g are formed in a T shape as viewed in the axial direction.

According to the above configuration, as illustrated in FIG. 3, the recess 41g having the bottom portion on the radial-direction outer side and open to the radial-direction inner side is formed by the outer-side cylindrical portion 41a, first radial-direction portion 41b, and oil dam member 41f of the clutch drum 41. With this, the oil supplied from the radial-direction inner side toward the outer side is stored in the recess 41g, and the friction plates 43 can be immersed in the oil, so that it is possible to achieve the lubrication of the starting clutch 4 with a simple structure only including the oil dam member 41f.

Even when the clutch hub 42 rotates and the clutch drum does not rotate at the time of stopping of the vehicle, the rotation of the clutch hub 42 lubricates the friction plates 43 passing through the inside of the recess 41g located on the lower side in the automatic transmission 1 in a vehicle installation state. Furthermore, the clutch drum 41 rotates at the time of starting of the vehicle, so that a state in which the oil is accumulated in the recess 41g is maintained by centrifugal force and the starting clutch 4 can be lubricated more effectively.

Furthermore, the oil supplied from the radial-direction inner side toward the outer side is guided to the radial-direction outer side of the inner-side cylindrical portion 42a by the baffle member 46 disposed on the radial-direction inner side of the clutch hub 42. As a result, the oil can be more effectively supplied to the friction plates 43 disposed on the radial-direction outer side of the clutch hub 42.

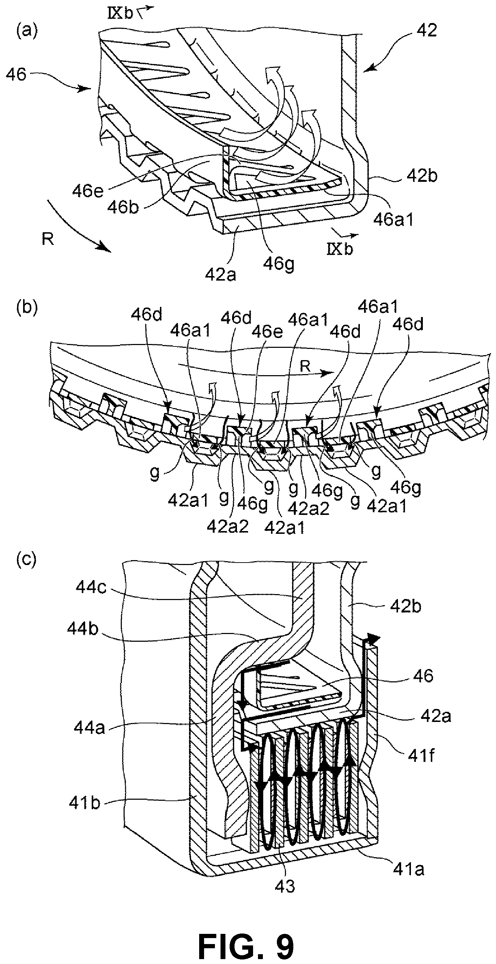

More specifically, when the clutch hub 42 rotates in a rotational direction R in a state where the oil is stored in the recess 41g, as indicated by white arrows of FIGs. 9(a) and 9(b), the oil is stirred so as to be scooped up by the wall portion 46g of the baffle member 46 toward the radial-direction inner side of the clutch hub 42. The oil stirred toward the radial-direction inner side falls by gravity and is directed to the radial-direction outer side (lower side), and as indicated by arrows of FIG. 9(b), via the gap g between the land portion 46a1 and the tooth bottom 42a2 adjacent to the land portion 46a1, the oil is supplied to a groove formed on the inner peripheral surface side of the tooth top 42a1 of the clutch hub 42 by the tooth top 42a1 of the clutch hub 42.

As illustrated in FIG. 9(c), the oil supplied to the groove is supplied from the end portion of the inner-side cylindrical portion 42a on the non-driving source side to the friction plates 43 side, is used to lubricate the friction plates 43 and then is discharged from the radial-direction inner side of the oil dam member 41f.

As illustrated in FIG. 3, the oil dam member 41f extends to the radial-direction inner side from the flange portion 46b of the baffle member 46, and thus a liquid surface of the oil stored in the recess 41g formed by the oil dam member 41f becomes on the radial-direction inner side from the baffle member 46, so that the baffle member 46 can be immersed in the oil. As a result, it becomes easier to obtain the effect of the baffle member 46 to guide the oil to the radial-direction outer side.

The cylindrical portion 44b of the piston 44 is provided with the through hole 44g, so that the oil supplied from the radial-direction inner side toward the outer side is supplied to the clutch hub 42 located on the outer peripheral side of the cylindrical portion 44b via the through hole 44g of the cylindrical portion 44b of the piston 44. Even when the cylindrical portion 44b of the piston 44 is disposed on the radial-direction inner side of the clutch hub 42, the oil can be supplied to the clutch hub 42.

The rotational speed sensor S for detecting an input rotational speed of the transmission mechanism 2 is disposed on the radial-direction outer side of the clutch drum 41, so that the gear-shifting control and the like of the transmission can be executed with the input rotational speed of the transmission mechanism 2 detected by the rotational speed sensor S. Furthermore, for example, as compared with a case where the clutch hub 42 is connected to the transmission mechanism 2, the rotational speed sensor S can be disposed with a simple structure.

Thus, according to the present invention, in the automatic transmission disposed between the engine and the transmission mechanism and including the clutch having the clutch drum connected to the transmission mechanism, the lubrication of the starting clutch at the time of stopping of the vehicle is achieved with the simple structure.

Although the present invention has been described above with reference to the above-described embodiment, the present invention is not limited to the above-described embodiment.

Various modifications and changes can also be made without departing from the gist and scope of the present invention described in the claims.

### [Industrial Applicability]

As above, according to the present invention, in an automatic transmission disposed between an engine and a transmission mechanism and including a starting clutch having a clutch drum connected to the transmission mechanism, it is possible to achieve, with a simple structure, lubrication of the starting clutch at the time of stopping of a vehicle; accordingly, it may be preferably used in an industrial field of manufacturing automatic transmissions including an automatic transmission of this type.

### [Reference Signs List]

- 1: automatic transmission
- 2: transmission mechanism
- 4: starting clutch
- 42a: inner-side cylindrical portion
- 42: clutch hub
- 41a: outer-side cylindrical portion
- 41: clutch drum
- 43: friction plate
- 44: piston
- 41b: radial-direction portion
- 41f: oil dam member
- S: rotational speed sensor

- 46: baffle member
- 44a: pressing portion
- 44b: cylindrical portion
- 44g: through hole

## Claims

1. An automatic transmission (1) comprising a starting clutch (4) disposed between an engine and a transmission mechanism (2) and configured to connect and/or disconnect motive power between the engine and the transmission mechanism (2), wherein
the starting clutch (4) comprises:
a clutch hub (42) connected to the engine and comprising an inner-side cylindrical portion (42a) located on a radial-direction inner side;
a clutch drum (41) connected to the transmission mechanism (2) and comprising an outer-side cylindrical portion (41a) disposed on the radial-direction outer side of the inner-side cylindrical portion (42a);
a friction plate (43) provided slidably between the clutch hub (42) and the clutch drum (41); and
a piston (44) which is configured to press the friction plate (43) from one axial-direction side, and
the clutch drum (41) comprises:
a radial-direction portion (41b) extending from an end portion of the outer-side cylindrical portion (41a) on the one axial-direction side to the radial-direction inner side; and
an annular oil dam member (41f) extending from an end portion of the outer-side cylindrical portion (41a) on another axial-direction side to the radial-direction inner side, and configured to immerse the friction plate (43) in oil supplied from the radial-direction inner side toward the outer side, together with the outer-side cylindrical portion (41a) and the radial-direction portion (41b).

2. The automatic transmission (1) according to claim 1, wherein a rotational speed sensor (S) configured to detect an input rotational speed of the transmission mechanism (2) is disposed on the radial-direction outer side of the clutch drum (41).

3. The automatic transmission (1) according to claim 1 or 2, wherein a baffle member (46) configured to guide the oil supplied from the radial-direction inner side toward the outer side to the radial-direction outer side of the inner-side cylindrical portion (42a) is disposed on the radial-direction inner side of the clutch hub (42).

4. The automatic transmission (1) according to claim 3, wherein the oil dam member (41f) extends to the radial-direction inner side from the baffle member (46).

5. The automatic transmission (1) according to any one of the preceding claims, wherein the piston (44) comprises:
a pressing portion (44a) disposed on the one axial-direction side of the friction plate (43) and extending in a radial direction; and
a cylindrical portion (44b) extending from the pressing portion to the other axial-direction side and located on the radial-direction inner side of the clutch hub (42), and
the cylindrical portion (44b) is provided with a through hole (44g) penetrating through the cylindrical portion (44b) in the radial direction.

6. The automatic transmission (1) according to claim 5 referring back to claim 3 or 4, wherein
the through hole (44g) is provided at an axial-direction position corresponding to the baffle member (46) .

7. The automatic transmission (1) according to any one of the preceding claims referring back to claim 3 or 4, wherein
the baffle member (46) includes a cylindrical body (46a), a flange portion (46b) extending from the cylindrical body (46a) on the one axial-direction side to the radial-direction inner side, and an opening (46c).

8. The automatic transmission (1) according to claim 7, wherein
the opening (46c) is provided with a guide portion (46d) configured to guide the oil to the radial-direction outer side.

9. The automatic transmission (1) according to any one of the preceding claims, further comprising a recess (41g) formed by the outer-side cylindrical portion (41a), the oil dam member (41f), and the radial-direction portion (41b).

10. The automatic transmission (1) according to any one of the preceding claims, wherein
the oil dam member (41f) is fixed or welded to the outer-side cylindrical portion (41a).

11. A vehicle comprising:
an engine; and
the automatic transmission (1) according to any one of the preceding claims.

12. The vehicle according to claim 11, wherein
the other axial-direction side is closer to the engine than the one axial-direction side.

13. The vehicle according to claim 12, wherein
the transmission mechanism (2) has a plurality of planetary gear sets and/or a plurality of friction fastening elements.

14. The vehicle according to any one of claims 11 to 13, further comprising a flywheel (5, 53) disposed between the engine and the starting clutch (4).

15. The vehicle according to claim 14, wherein
an input shaft (9) of the automatic transmission (1) is connected or fixed to the flywheel (5, 53), and/or
an output shaft (3) of the engine is connected or fixed to the flywheel (5, 53).
